# EUROPEAN PATENT SPECIFICATION

(11) **EP 2 457 193 B1**
(45) Date of publication and mention of the grant of the patent: **13.06.2018**
(21) Application number: 10732953.4
(22) Date of filing: 13.07.2010
(51) Int. Cl.: G06K 7/10, G06K 7/00

(54) **A MOVEMENT DETECTION METHOD AND READER/WRITERS IN A RADIO FREQUENCY IDENTIFICATION SYSTEM**
BEWEGUNGSDETEKTIONSVERFAHREN UND LESE-/SCHREIBVORRICHTUNGEN IN EINEM HOCHFREQUENZIDENTIFIKATIONSSYSTEM
PROCÉDÉ DE DÉTECTION DE MOUVEMENT ET DISPOSITIFS DE LECTURE/ÉCRITURE DANS UN SYSTÈME D'IDENTIFICATION RADIOFRÉQUENCE

(30) Priority: 20.07.2009 CN 200910160062
(43) Date of publication of application: 30.05.2012
(73) Proprietor: Siemens Aktiengesellschaft, 80333 München (DE)
(72) Inventor: HORST, Dieter, 90556 Cadolzburg (DE); YU, Dan, Beijing 100102 (CN); YUAN, Yong, Beijing 102208 (CN)
(86) International application number: PCT/EP2010/060048
(87) International publication number: WO 2011/009767

(56) References cited:
- WO-A1-2009/055839
- US-A1- 2005 285 742

## Description

### Technical Field

The present invention relates to Radio Frequency Identification (RFID) technology, and more particularly to a tag movement detection method and corresponding reader/writers in a radio frequency identification system.

### Background Technology

With the development of science and technology, Ultra High Frequency RFID (UHF RFID) technology has an increasingly extensive use in logistics and manufacture fields. Compared with traditional High Frequency RFID (HF RFID) technology, UHF RFID technology has the advantages of faster read/write speed, lower tag cost and longer read/write range. However, due to the far field electromagnetic transmission characteristics, UHF RFID is easily influenced by multipath transmission in the complicated industrial environment, leading to reduction in reliability, thus limiting the application of this technology. Especially in the manufacturing field, the surrounding metals aggravate the problem.

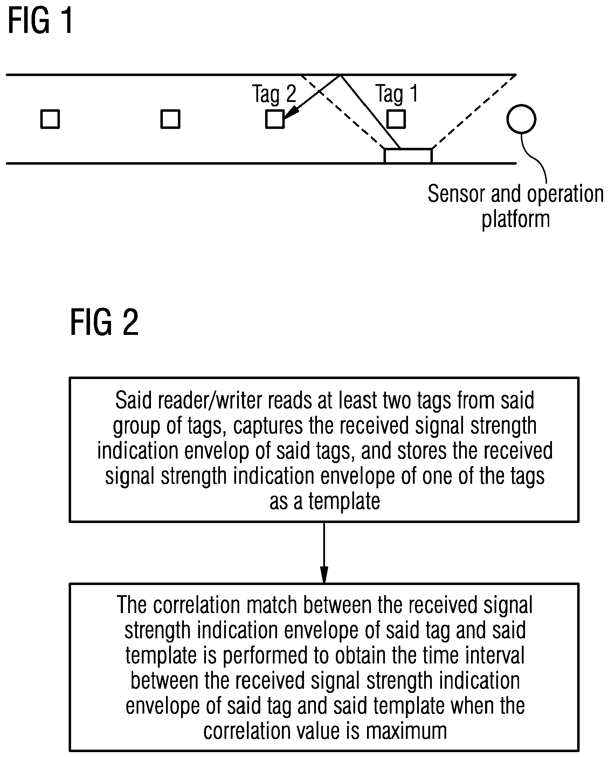

Figure 1 is an example of identifying workpieces under the influence of multipath transmission. It can be seen from Figure 1 that tag 1 is in front of tag 2 on a conveyor belt, thus tag 1 will arrive at the reader/writer earlier than tag 2. In the prior art, when a reader/writer reads the signal of a tag for the first time, it is considered that the reader/writer starts reading the tag. However, due to the influence of multipath transmission, the reader/writer may firstly read the transmission signal of tag 2, considering tag 2 is in front of tag 1, and further send the information read from tag 2 to the sensor located ahead of it. Then, when the workpiece with tag 1 arrives at the proximity of the sensor and the operation platform, the system will mistake the tag attached to the workpiece for tag 2, leading to misoperation of the workpiece. That is to say, during the above tag identification process, UHF RFID technology cannot ensure the First-Come-First-Read (FCFR) principle, which will limit the application of UHF RFID technology in the product quality fields and logistics industry, such as baggage tracking at airports.

There is now a general recognition of the unreliability of UHF RFID technology caused by multipath transmission. In order to make UHF RFID more practicable, most solutions in the prior art try to limit transmission of the electromagnetic wave. For example, in some industries where a conveyor belt is used, a special casket made of microwave absorbing material is designed to limit the transmission of the electromagnetic wave, with the goal of reducing multipath transmission and ensuring FCFR. Moreover, the special casket is also employed in baggage tracking devices at airports. However, the casket is very expensive due to its use of microwave absorbing material. For example, the price of such a casket in a large size as used in airports is about RMB800,000.

The publication WO 2009/055839 A1 - Laviale et al. "Object Singulation Process" shows recording of RSSI envelopes of RFID tags while passing a reader via a conveyor. RSSI envelopes are analyzed to distinguish between tags of two different tag population groups in different containers or the like, and to distinguish between moving and non-movings tags.

### Description of the Invention

The main object of the present invention is to provide a movement detection method in a radio frequency identification system and a reader/writer to realize the method, wherein the First-Come-First-Read principle towards tag reading in the radio frequency identification system can be ensured if the method is employed.

In order to realize the above object, the present invention proposes a movement detection method in a Radio Frequency Identification (RFID) system, wherein said RFID system includes one or more reader/writers and a group of tags, and each of said tags is attached to a workpiece, according to claim 1. According to an embodiment of the present invention, said reader/writers read the tags located in their read/write areas during each reading cycle, capture the received signal strength indication of said tags, and then said reader/writers perform a new reading cycle for the tags located in their read/write areas.

Preferably, in said each reading cycle, firstly, said reader/writers capture the received signal strength indications of each active tag located in their read/write areas; then said reader/writers capture the received signal strength indication of a new tag which has just come into the read/write area, or continuously failing to capture the received signal strength indication of a tag, they will identify said tag as an inactive tag.

Preferably, in said each reading cycle, said reader/writers send a selection command individually to the active tags located in their read/write areas to select said tags, and capture the received signal strength indication of said selected active tags. Said selection command is SELECT (MASK=Tag ID, Target=S2, Action=100), wherein, MASK=Tag ID indicates the selected tag identifier, Target=S2 indicates that the selected period is S2, Action=100 indicates that if the identifier of one tag matches Tag ID, S2 of said tag is set to B, else, S2 of said tag is set to A.

Preferably, in said each reading cycle, said reader/writers send a query command to query the new tag which has just come into the read/write area, and capture the received signal strength indication of said new tag. Said query command is Query (Q=0, S0, A), and for said new tag which has just come into the read/write area or said inactive tag, S0 of said tag is set to A, and for the active tag located in said read/write area, S0 of said tag is set to B.

Preferably, when the continuous failures to capture the received signal strength indication of a tag reach a threshold number, said tag is identified as an inactive tag.

Preferably, said reader/writers include a status table which records the received signal strength indication of each tag read by said reader/writers, the reading time, the status of said tag, and the number of the received signal strength indications of said tags, and updates said status table during each reading cycle.

Accordingly, the present invention proposes a reader/writer which reads and writes the tags in the RFID system, wherein said reader/writer includes:
a reading unit for reading at least two tags from a group of tags and capturing the received signal strength indication envelopes of said tags;
a storing unit for storing the received signal strength indication envelope of one of the tags as a template;
a correlation unit for performing a correlation match between the received signal strength indication envelopes of said tags and said template to obtain the time interval between the received signal strength indication envelopes of said tags and said template when the correlation value is the maximum.

In a preferred embodiment, said reader/writer further includes a calculating unit, which takes a time in said template as a standard time and calculates the time of said tags passing said reader/writer based on said standard time and said time interval; or which is used to calculate the moving speed of a workpiece based the time interval between said tags for the correlation match and the distance between said tags.

In a preferred embodiment, said reader/writer further includes a command sending unit, which is used to send the selection command and the query command, wherein said selection command selects the active tags located in its read/write area during said each reading cycle, and captures the received signal strength indication of said selected active tags, and said query command is used to query the new tag which has just come into the read/write area during said each reading cycle, and to capture the received signal strength indication of said new tag.

The present invention provides a method for detecting the moving status of an object based on the RSSI envelope. Firstly, through this method, the reader/writer can report each tag that is right in front of the antenna, even if multiple tags exist in the complicated industrial environment, thus ensuring the FCFR and improving the reliability of the UHF RFID system. This method can detect the moving speed and direction of the tags through the RSSI envelope, thereby greatly expanding the range of applications of the UHF RFID technology. Moreover, this method only relies on direct special signal exchange between the reader/writer and tags, and the signal design completely conforming to the current UHF RFID standard, i.e. EPC C1G2. Therefore, it can be realized by simple modification of the reader/writer firmware, without any changes to the tags and reader/writer hardware. Furthermore, the reader/writer only relies on the relative reference value and special signal design of the RSSI envelope without any other equipment. In addition, RSSI only uses ordinary antenna without a specially designed antenna system. Moreover, this method relies on the relative reference value of the RSSI envelope of the moving tags in the same environment, and does not rely on any form of absolute transmission model, thus the environment and the distance between the reader/writer and tags will not have much influence on the performance.

### Description of the Drawings

The embodiments of the present invention are further described below in conjunction with the drawings, wherein,
Figure 1 is an example of identifying workpieces under the influence of multipath transmission;
Figure 2 is a flow chart of the movement detection method in a radio identification system;
Figure 3 is a schematic diagram of the first embodiment according to the present invention, i.e. diagram of implementing the First-Come-First-Read principle by employing the RSSI envelope correlation according to the present invention;
Figure 4 is a schematic diagram of the result of First-Come-First-Read detected by the prior art and the method of the present invention;
Figure 5 is a schematic diagram of a special signaling solution which is adopted in the method of the present invention to realize the RSSI envelope correlation;
Figure 6 is an example of identifying workpieces with the method of the present invention;
Figure 7 is a schematic diagram of the second embodiment of the present invention, i.e. a diagram for detecting the moving speed and direction of the object by employing the RSSI envelope correlation method of the present invention;
Figure 8 is a schematic diagram of the RSSI envelope correlation on two tags of one workpiece employing the RSSI envelope correlation method of the present invention; and
Figure 9 is a schematic diagram of RSSI envelope correlation on two tags of one workpiece in practical determination employing RSSI envelope correlation method of the present invention.

### Embodiments of the invention

The core idea of the present invention is that the received signal strength indication RSSI of at least two tags is read to obtain the received signal strength indication RSSI envelope instead of using the time when the reader/writer successfully reads a tag for the first time as the reading time of this tag. The received signal strength indication RSSI envelope of one of tags is used as the template, and a correlation match is done between the received signal strength indication RSSI envelope of other tag and said template one by one. For any of the other tags, it can obtain the time interval between the received signal strength indication RSSI envelope of the tag and said template when the correlation value is the maximum.

The embodiments of the present invention are described in the following by the example of a radio identification system comprising reader/writers and tags.

Figure 2 gives the flow chart of a movement detection method in the radio frequency identification system of the present invention. The radio frequency identification system of the present invention includes one reader/writer with an antenna and a group of workpieces positioned on a conveyer belt wherein each workpiece has at least one tag attached. There are some tags in the read/write area of the antenna.

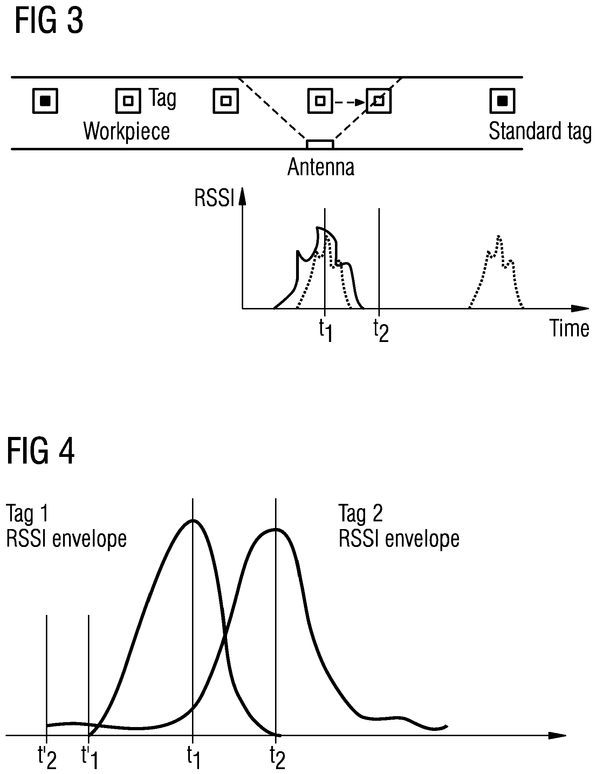

Figure 3 is the schematic diagram of the first embodiment of the present invention. In Embodiment 1, the RSSI envelope correlation of the present invention is used to achieve the First-Come-First-Read FCFR. Firstly, a standard tag is set on the first workpiece. The standard tag has one identifier different from those of other workpieces. The standard tag is usually set to the electronic products code, or EPC, which is different from the identifiers of other tags.

Secondly, reader/writers read the standard tag, capture the received signal strength indication RSSI envelope of the standard tag when the tag moves in the read/write area, and store the received signal strength indication RSSI envelope of the standard tag as a template. The standard tag is located to the rightmost side of the upper drawing in Figure 3. The received signal strength indication RSSI envelope captured and stored by the reader/writers is located to the rightmost side of the lower drawing in Figure 3, which is stored as a template by the reader/writers.

Then reader/writers capture the received signal strength indication RSSI envelope of each work piece that is moving in the read/write area. Particularly, when the reader/writer detects a workpiece tag, it immediately reports to the host. The reader/writer will further capture the identifier ID and RSSI time stamp of this workpiece until the workpiece is no longer read. The reader/writers repeat the above operations for all workpieces moving in their read/write areas.

Then, the correlation match between the received signal strength indication RSSI envelope of each tag and the RSSI envelope template of the standard tag is performed to obtain the time interval between the received signal strength indication RSSI envelope of the tag and said template when the correlation value is maximum. It is a proven technology in pattern recognition to match the correlation of two envelopes and identify the time interval between the received signal strength indication RSSI envelope of the tag and said template when the correlation value is maximum.

The reader/writers can select a time in the template as a standard time. For example, the intermediate time in said template is selected as the standard time or the time when the received signal strength indication in the template reaches the maximum value is selected as the standard time. Then the reader/writers obtain the time of said tag passing through said reader/writers based on said selected standard time and said time interval. When a symmetric antenna is used, the time of passing through the reader/writer we are discussing here is the time of the workpiece tag passing the front of the reader/writer's antenna. Even if an asymmetric antenna is used, any position of the antenna can be selected as the position used to define the time of passing through the reader/writer provided this position is used for all tags.

On the left of the lower drawing in Figure 3, the dashed line is the RSSI envelope of the standard tag, the solid line is the RSSI envelope of a workpiece, and t1 is the time of workpiece right in front of the reader/writer's antenna. However, the reader/writer correlates the RSSI envelope of the tag only after it cannot read the tag any more, that is to say, the reader/writer obtains the time t1 of the workpiece when it is right in front of the reader/writer's antenna only at a later time t2 and then it informs the host that the tag was read at time t1.

The reason for correlating the RSSI envelope of the workpiece with the RSSI envelope of the standard tag is that the two tags pass through the same environment, thus the two RSSI envelopes will be very similar. This is the reason why there is less impact from the environment and the distance between the reader/writer and the tag on the accuracy of the tag movement detection. The method can ensure the implementation of First-come-first-read FCFR. The results of detecting FCFR by the prior art and this method are given in Figure 4.

According to the conventional tag reading method, the reader/writer immediately reports the reading of the tag once it detects the tag. In Figure 4, although tag 2 is at the back of tag 1 on the conveyer belt, the reader/writer first reads tag 2 at *t*^{'}₂ and then reads tag 1 at *t*^{'}₁ due to the impact of multipath transmission. However, the reading error at time *t*^{'}₂ is accidental and the reader/writer will not always have this reading error. However, even if the error happens only once, the reader/writer has violated the FCFR principle. For the method of the present invention, the reader/writer can easily judge that tag 1 is in front of tag 2 by detecting the correlation of the whole envelope of the workpiece tags and the template of the standard tag. To compensate for the environmental difference, the standard tag can also be added periodically to calibrate the RSSI template.

The following issues should be considered for better real-world application of the method provided by the present invention. Firstly, the reader/writers must have uniform, fair and quick sampling of all workpiece tags. Secondly, it is difficult to ensure that only one tag is in the reading area because of the problem of the large span of antennas, limited space between tags and multipath transmission. For this reason, the reader/writer should ensure the uniform sampling of all tags which have come into the read/write area in order to solve the sampling problem of multiple tags in the read/write area. Besides, the reader/writer can distinguish the tags which come into the read/write area and the mistakenly read tags which do not come into the read/write area. A special signaling transmission scheme is used in the present invention to achieve the above goal.

Firstly, for read tags, the reader/writer will create a tag status table (TST) in which all read tags are stored. For each tag, the received signal strength indication RSSI read at time t (time stamp), the status of the tag, and the number of times the tags are read/written are listed in Table 1. Said status of tag means the following two conditions: (1) tags in the read/write area which are read by the reader/writer (hereinafter the "old tags"), or tags in the read/write area which are read by the reader/writer for the first time (hereinafter the "new tags"), and no matter whether they are old or new tags, once the tag is read by the reader/writer, its status in the reader/writer's tag status table will be set to "active tag"; and (2) tags outside the read/write area which are accidently read by the reader/writer once or more times but are not read by the reader/writer the next few times (hereinafter the "inactive tags").

**Table 1 "Tag status table" stored in reader/writers**

| Tag ID | (RSSI, Time stamp) | Status | Number of readings |
|---|---|---|---|
| Tag 1 | (RSSI1, t1), (RSSI2, t2).... | Active Tag | N1 |
| Tag 2 | (RSSI1, t1), (RSSI2, t2).... | Active Tag | N2 |

When reading the tag, the reader/writer reads the tag for N reading cycles. In this case, each reading cycle is divided into two parts. In the first part, the reader/writer first processes the tags with "active tag" status in the tag status table. In the second part, the reader/writer processes the new tag that has just come into the read/write area, or inactive tag.

In any reading cycle, once the reader/writer detects a tag, it immediately adds the tag to the tag status table TST or updates the data in the tag status table TST. Furthermore, the tags read by the reader/writers are divided into two types. One type is the tag newly detected by the reader/writer and the tag will be added by the reader/writer to the tag status table TST, and the status of the tag will be set to "active tag" in the tag status table TST, and the number of readings will be set to 1. The other type is the re-read tag which has been read before. In this case, the status of the tag is also set to "active tag" in the tag status table TST, and the reader/writer updates the number of readings for the tag in the tag status table. In addition to the above two cases, if the reader/writer reads a tag for one or more times in succession in the previous few reading cycles but does not read the tag in the next few reading cycles, the status of the tag is updated to "inactive tag" in the tag status table TST.

In the first part of each reading cycle, the reader/writer sends a selection command SELECT for each active tag in the tag status table TST. In the SELECT command, the parameters are as follows: MASK = Tag ID, Target = S2, Action = 100. The operation corresponding to Action = 100 is that S2 of the matching tag is set to B if the TagID of the tag matches the TagID in the SELECT command and that S2 is set to A if they do not match. In the first part of each reading cycle, through the SELECT command, the reader/writer can select the active tags in the tag status table TST one by one, read the RSSI and record the reading time for the selected tag, and add the RSSI result and reading time to the tag status table TST. Through this selection command, it is ensured that all active tags in the tag status table can be sampled once in the first part of each reading cycle, thus ensuring uniform sampling of the tags present in the read/write area.

In the second part of each reading cycle, the reader/writer queries the new tag that just came into the reading area. The reader/writer sends a query command Query (Q=0, S0, A). The reason for adopting the query command Query (Q=0, S0, A) is described below. For a new tag which has just come into the read/write area, its S0 is set to A; for active tags present in the read/write area which are read once by the reader/writers, S0 is set to B; for tags which were read once by the reader/writers and as such their S0 have been set to B, if the inactive tags are not read by the reader/writers in the next reading cycle, their S0 will be set to A. In other words, the active tags with S0 set to B would not respond to the command Query (Q=0, S0, A) in the second part of the reading cycle. Only new tags or inactive tags will have their S0 set to A. After query command in the second part of cycle, the reader/writer also adds new tags or inactive tags to the tag status table TST and sets their status as "active tag" and "inactive tag", respectively.

Furthermore, for the abovementioned inactive tags, a decision threshold is usually set. That is to say, if the reader/writer first reads an inactive tag and does not read the tag in the next cycles (threshold), the tag is considered an inactive tag.

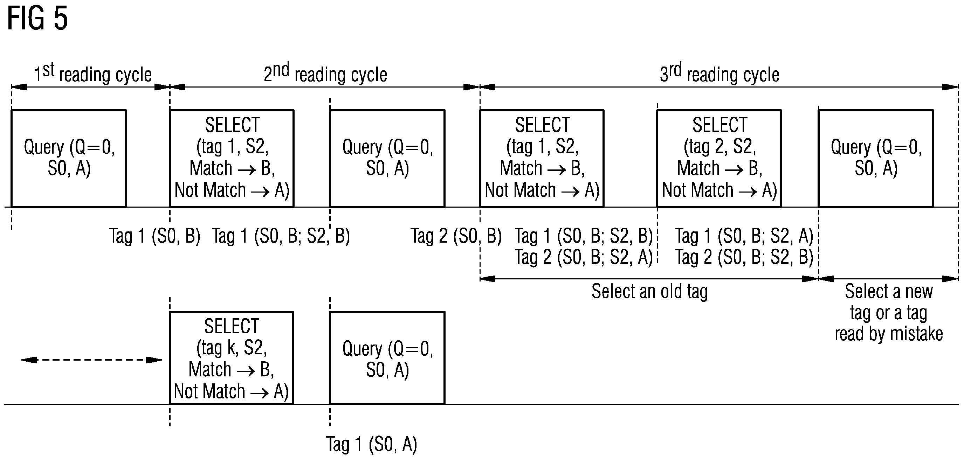

Figure 5 gives the special signaling transmission scheme diagram to implement RSSI correlation matching in the present invention. In the first cycle shown in Figure 5, there is no active tag read from the read/write area because reader/writers just start the reading process. Thus it sends a query command Query (Q=0, S0, A). Tag 1 is a new tag and its S0 is A. The reader/writer reads a received signal strength indication RSSI of tag 1, records the reading time, and adds the above information about tag 1 to the tag status table TST. After reading tag 1, the status of tag 1 in the tag status table TST is "active tag", the number of read/write is 1, and S0 of tag 1 is set to B.

In the second reading cycle, the reader/writer first sends a selection command SELECT in the first part of the cycle to select the active tag with the parameters of SELECT (MASK= Tag 1, Target = S2, Action = 100). That is to say, if tag 1 finds that the MASK in the SELECT command is tag 1, then S2 of tag 1 is set to B, that is, the reader/writer selects tag 1 by the SELECT command, and reads one received signal strength indication RSSI of tag 1 and records the time of reading, and adds the above information about tag 1 to the tag status table TST. After tag 1 is read, the status of tag 1 in the tag status table TST is "active tag", the number of read/write repetitions is 2, and S0 of tag 1 is B.

Then the reader/writer sends a query command Query (Q=0, S0, A) in the second part. Since S0 of tag 1 is B, it does not respond to the command. Tag 2 is a new tag and its S0 is A. The reader/writer reads a received signal strength indication RSSI of the new tag 2, records the reading time, and adds the above information about tag 2 to the tag status table TST. After reading tag 2, the status of tag 2 in the tag status table TST is set to active, the number of read/write repetitions is 1, and S0 of tag 2 is set to B.

In the third reading cycle, the reader/writer sends a selection command SELECT in the first part and reads the active tag. The specific parameter is SELECT (MASK=Tag 1, Target=S2, Action= 100). At this time, there are tag 1 and tag 2 in the read/write area. If tag 1 finds that MASK in SELECT command is tag 1, then S2 of tag 1 is set to B. If tag 2 finds that MASK in the SELECT command is tag 1 rather than tag 2, then S2 of tag 2 is set to A. That is, the reader/writer selects tag 1 through the SELECT command, reads a received signal strength indication RSSI of tag 1, records the reading time for tag 1, and adds the above information about tag 1 to the tag status table TST. After tag 1 is read, the status of tag 1 in the tag status table TST is "active tag", the number of read/write repetitions is 3, and S0 of tag 1 is B. At the same time, the status of tag 2 in the tag status table TST is set to active, the number of read/write repetitions is 1, and S0 of tag 2 is set to B.

Then, the reader/writer sends a selection command SELECT again to read the active tag with parameter SELECT (MASK=Tag 2, Target=S2, Action =100). In other words, if tag 2 finds that MASK in the SELECT command is tag 2, then S2 of tag 2 is set to B. If tag 1 finds that MASK in the SELECT command is tag 2 rather than tag 1, then S2 of tag 1 is set to A. That is, the reader/writer selects tag 2 through said SELECT command, reads a received signal strength indication RSSI of tag 2, records the time, and adds the above information about tag 2 into the tag status table TST. After reading tag 2, the status of tag 2 in the tag status table TST is active, the number of read/write repetitions is 2, and S0 of tag 2 is B. At the same time, the status of tag 1 in the tag status table TST is active, the number of read/write repetitions is 3, and S0 of tag 2 is set to B.

Then the reader/writer sends a query command Query (Q=0, S0, A) in the second part of the cycle. Since both tag 1 and tag 2 have S0 set to B, they do not respond to the command. The reader/writer reads the new tags with an S0 of A, or inactive tags.

In the fourth reading cycle, the reader/writer first sends a selection command SELECT in the first part of the cycle and read the active tags. Assuming that tag 1 is the tag which is outside the read/write area and is accidently read by the reader/writer, if tag 1 is read by the reader/writer in the previous three reading cycles and is not read by the reader/writer in the fourth reading cycle, then tag 1 automatically sets its S0 to A when the fourth reading cycle ends. In other words, for a tag with S0 as B which is read by the reader/writer once or several times in succession, if it is not read once, its S0 would be set back to A and the status of tag 1 in the tag status table is set to inactive by the reader/writer.

If tag 1 is not read in the next several reading cycles wherein the particular number of reading cycles can be limited by the threshold, it can be decided that tag 1 is a tag that is ready by mistake. Furthermore, the active tag can be set to inactive tag by reading the received signal strength indication RSSI value. For example, when the received signal strength indication RSSI value is very small, the tag is considered a tag that is read by mistake, and its S0 will be set to A, and its status will be set to inactive. Only when tag 1 truly moves into the read/write area of the reader/writer can the reader/writer continuously read tag 1.

If a tag in the read/write status table is continuously read for many times and said tag is not read for a period of time later on, it can be decided that the tag has left the read/write area. Thus the correlation match can be implemented by using a series of received signal strength indications RSSI and the corresponding time stamp and the template.

It is illustrated in Figure 5 that the reading cycle of the present invention can ensure uniform sampling and recording of the received signal strength indication RSSI envelope of each tag. Then the time of each tag located right in front of the reader/writer's antenna can be obtained by performing a correlation match between the RSSI envelope of each tag and the RSSI envelope of the standard tag.

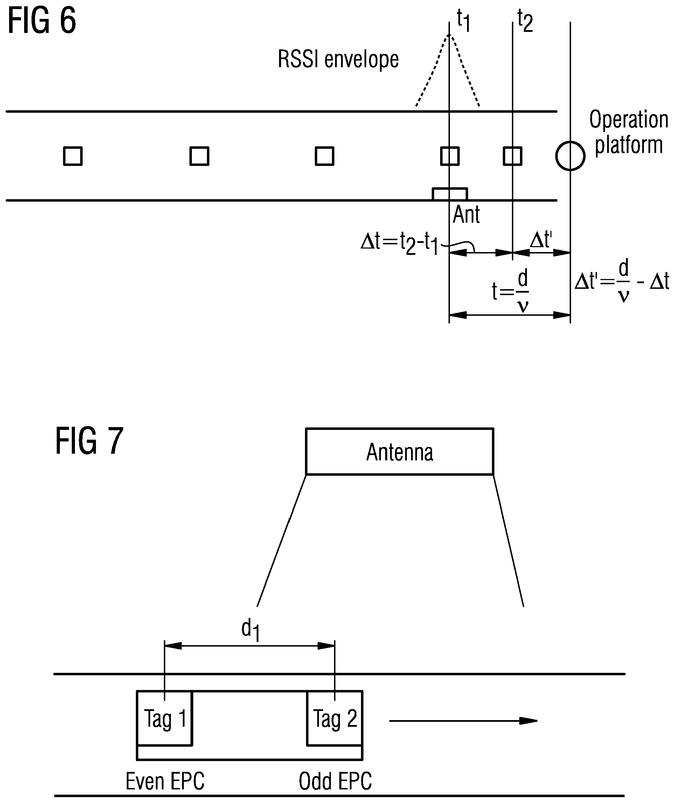

Figure 6 gives an example of the present invention used for identifying workpieces. The antenna is placed at the location not far from the operation platform. The distance between the antenna and the operation platform is known and is expressed by d. At time t₂, the reader/writer can determine that the tag is right in front of the antenna at time t₁. The reader/writer can estimate how long the tag would arrive at the operation platform from the time t₂ by the equation d/v-(t₂-t₁). Then, when the tag arrives at the operation platform, the system determines the right tag ID according to the proximity sensor of the operation platform, thus ensuring the FCFR is achieved.

Figure 7 is a schematic diagram of the second embodiment of the present invention, i.e. the schematic diagram of the application of RSSI envelope correlation of the present invention for detecting the moving speed and direction of an object. The radio frequency identification system in Figure 7 includes one reader/writer and a group of workpieces, wherein two tags, the first tag and the second tag, are attached to the two ends of one workpiece.

Firstly, the TagIDs of the first tag and the second tag are set differently. For example, the identifier of the first tag is set to an odd EPC identifier and the identifier of the second tag is set to an even EPC identifier.

Then the reader/writer separately reads the first tag and the second tag and captures the RSSI envelopes of the first tag and the second tag moving in the read/write area. When the tags move rightward as shown in Figure 7, the reader/writer first reads the RSSI envelope of the first tag and stores the RSSI envelope of the first tag as a template. Then, the reader/writer reads the received signal strength indication RSSI envelope of the second tag.

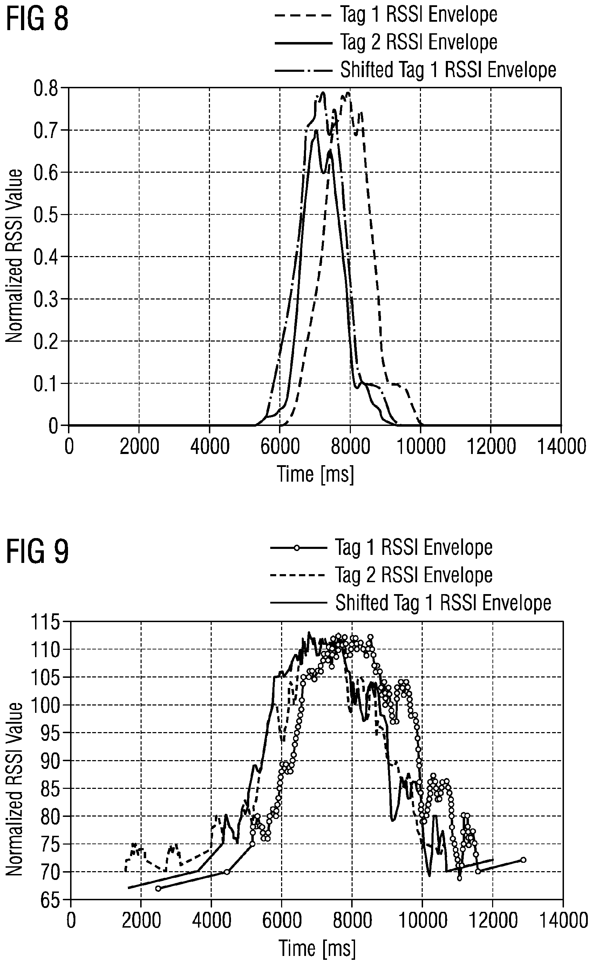

Then the reader/writer performs the correlation match between the RSSI envelope of the second tag and the RSSI envelope template of the first tag to obtain the time interval Δt between the RSSI envelopes of the two tags when the RSSI envelope correlation value of the two tags is the maximum. Figure 8 shows a schematic diagram of the RSSI envelope correlation of two tags on a workpiece using the RSSI envelope correlation match method of the present invention. The obtained time interval in the figure is T_{d}.

Then, according to the time interval Δt between the two tags and the distance d between the two tags, the moving speed of said workpiece is calculated, i.e. v=d/Δt. In addition, according to the position of the two tags for the correlation match, the moving direction of the workpiece can be obtained. For example, if the rightward moving time is used as time axis, the tag with the odd EPC identifier in Figure 7 is ahead of the tag with the even EPC identifier. Thus it is decided that the workpiece moves rightward.

As a variant of embodiment 2 of the present invention, three tags can be individually attached to the two ends and the middle of the workpiece. For example, the tags are the first tag, the second tag and the third tag from left to right. For any two tags, said method in the above embodiment 2 can be used to detect the moving speed of the object. Then the average speed of the workpiece can be calculated based on the obtained moving speeds of the three tags or two thereof.

In the above embodiment 2, the signaling transmission scheme used is completely the same as that in embodiment 1 so it is not repeated herein.

Figure 9 shows the schematic diagram of actually measured RSSI envelope correlation of two tags on a workpiece using the RSSI envelope correlation match method of the present invention. It can be seen in Figure 9 that the method of the present invention can find the correct time point of the RSSI envelope correlation, thereby detecting the moving direction/speed.

The present invention proposes a reader/writer in the RFID system for reading and writing tags, wherein said reader/writer includes:
a reading unit for reading at least two tags in a group of tags, and capturing the RSSI envelope of said tag; a storing unit for storing the RSSI envelope of one tag as a template; a correlation unit for performing the correlation match between the RSSI envelope of said tag and said template to obtain the time interval between the RSSI envelope of said tag and said template when the correlation value is the maximum.

Said reader/writer further includes a calculating unit, for taking a time in said template as a standard time and calculating the time of said tag passing said reader/writer based on said standard time and said time interval; or for calculating the moving speed of the workpiece based on the distance between said tags and the time interval between said tags for the correlation match.

Said reader/writer further includes a command sending unit, for sending the selection command and the query command, wherein said selection command selects active tags located in the read/write area during said each reading cycle, and captures the received signal strength indication of said selected active tag; said query command queries a new tag which has just come into the read/write area during each reading cycle, and captures the received signal strength indication of said new tag.

These are only the preferred embodiments of the present invention and it should be noted that for those skilled in the art, improvements and modifications can be made without departing from the principle of the present invention and these improvements and modifications should also fall within the protective scope of the present invention.

## Claims

1. A method for ensuring, at an operation platform, a First-Come-First-Read (FCFR) principle in a Radio Frequency Identification (RFID) system, wherein said RFID system includes one or more reader/writers and a group of tags, and each of said tags is attached to a workpiece on a conveyor belt, **characterized in**
**that** the method includes the following steps:
(1) in multiple reading cycles, said reader/writers read at least two tags from said group of tags, capture the sequence of received signal strength indications resulting from the multiple reading cycles as envelopes of said tags, and store the received signal strength indication envelope of one of the tags as a template;
(2) a correlation match between the received signal strength indication envelopes of said tags and said template is performed to obtain the time interval between the received signal strength indication envelopes of said tags and said template when the correlation value is the maximum,
wherein one time in said template is taken as a standard time to obtain the time of said tags passing said reader/writers based on said standard time and said time interval, and
(3) calculating, based on said time intervals and the distance between an antenna of the RFID system and the operation platform, the arrival time for each workpiece at the operation platform for ensuring FCFR..

2. The method in the RFID system as claimed in claim 1, **characterized in that** said standard time is the intermediate time of said template or is the time when the received signal strength indication in said template reaches the maximum value, and the time of said tags passing in front of said reader/writers' antennas is obtained based on said standard time and said time interval.

3. The method in the RFID system as claimed in any one of claims 1-2,
**characterized in**
**that** said method further performs a calculating, which takes a time in said template as a standard time and calculates the time of said tags passing said reader/writer based on said standard time and said time interval; or which is used to calculate the moving speed of a workpiece based on the time interval between said tags for the correlation match and the distance between said tags.

4. The method in the RFID system as claimed in claim 1, **characterized in that** said tags for the correlation match have different identifiers.

5. The method in the RFID system as claimed in claim 4, **characterized in that** said tags for the correlation match each have an odd electronic product code identifier and an even electronic product code identifier.

6. The method in the RFID system as claimed in claim 4 or claim 5, **characterized in that** a moving speed of said workpiece is calculated according to the time interval between said tags for the correlation match and the distance between said tags.

7. The method in the RFID system as claimed in claim 6, **characterized in that** the moving direction of said workpiece is calculated according to the position of said tags for the correlation match.

8. The method in the RFID system as claimed in claims 1 - 5, **characterized in that** said reader/writers read the tags located in their read/write areas in each reading cycle, capture the received signal strength indication of said tags, and then said reader/writers perform a new reading cycle for the tags located in their read/write areas.

9. The method in the RFID system as claimed in claim 8, **characterized in that** in said each reading cycle, firstly, said reader/writers capture the received signal strength indication of each active tag located in their read/write areas; then said reader/writers capture the received signal strength indication of a new tag which has just come into the read/write area, or continuously failing to capture the received signal strength indication of a tag, they will identify said tag as an inactive tag.

10. The method in the RFID system as claimed in claim 9, **characterized in that** in said each reading cycle, said reader/writers send a selection command individually to the active tags located in their read/write areas to select said tags, and capture the received signal strength indication of said selected active tags.

11. The method in the RFID system as claimed in claim 10, **characterized in that** said selection command is SELECT (MASK=Tag ID, Target=S2, Action=100), wherein, MASK=Tag ID indicates the selected tag identifier, Target=S2 indicates that the selected period is S2, and Action=100 indicates that if the identifier of one tag matches Tag ID, then S2 of said tag is set to B, else, S2 of said tag is set to A.

12. The method in the RFID system as claimed in claim 9, **characterized in that** in said each reading cycle, said reader/writers send a query command to query the new tag which has just come into the read/write area, and capture the received signal strength indication of said new tag.

13. The method in the RFID system as claimed in claim 12, **characterized in that** said query command is Query (Q=0, S0, A), and for said new tag which has just come into the read/write area or for said inactive tag, S0 of said tag is set to A, and for the active tag located in said read/write area, S0 of said tag is set to B.

14. The method in the RFID system as claimed in claim 9, **characterized in that** when the continuous failures to capture the received signal strength indication of a tag reach a threshold number, said tag is identified as an inactive tag.

15. The method in the RFID system as claimed in claim 8, **characterized in that** said reader/writers include a status table which records the received signal strength indication of each tag read by said reader/writers, the reading time, the status of said tags, and the number of the received signal strength indications of said tags, and updates said status table during each reading cycle.

16. A reader/writer which reads and writes the tags in the RFID system, **characterized in that**, said reader/writer includes:
a reading unit for reading at least two tags from a group of tags and capturing the received signal strength indication envelopes of said tags, each of said tags being attached to a workpiece on a conveyor belt;
a storing unit for storing the received signal strength indication envelope of one of the tags as a template;
a correlation unit for performing a correlation match between the received signal strength indication envelopes of said tags and said template to obtain the time interval between the received signal strength indication envelopes of said tags and said template when the correlation value is the maximum,
**characterized in**
**that** one time in said template is taken as a standard time to obtain the time of said tags passing said reader/writers based on said standard time and said time interval, and
**that**, based on said time intervals and the distance between an antenna of the RFID system and an operation platform, the arrival time for each workpiece at the operation platform for ensuring an First-Come-First-Read operation (FCFR) is calculated..

17. The reader/writer which reads and writes the tags in the RFID system as claimed in claim 16, **characterized in that** said reader/writer further includes a command sending unit, which is used to send the selection command and the query command, wherein said selection command selects the active tags located in its read/write area during said each reading cycle, and captures the received signal strength indication of said selected active tags, and said query command is used to query the new tag which has just come into the read/write area during said each reading cycle, and to capture the received signal strength indication of said new tag.

## Patentansprüche

1. Verfahren zur Sicherstellung, auf einer Betriebsplattform, eines First-Come-First-Read(FCFR)-Prinzips in einem Funkidentifikations(Radio Frequency-Identification, RFID)-System, wobei das RFID-System eine oder mehrere Lese-/Schreibvorrichtungen und eine Gruppe von Transpondern aufweist und wobei jeder der Transponder an einem Werkstück auf einem Förderband angebracht ist,
**dadurch gekennzeichnet,**
**dass** das Verfahren die folgenden Schritte beinhaltet:
(1) in mehreren Lesezyklen lesen die Lese-/Schreibvorrichtungen wenigstens zwei Transponder aus der Gruppe von Transpondern, erfassen die Abfolge der Empfangssignalstärkeanzeigen, die aus den mehreren Lesezyklen hervorgehen, als Hüllkurven der Transponder und speichern die Hüllkurve der Empfangssignalstärkeanzeige eines der Transponder als Schablone;
(2) ein Korrelationsabgleich zwischen den Hüllkurven der Empfangssignalstärkeanzeige der Transponder und der Schablone wird durchgeführt, um das Zeitintervall zwischen den Hüllkurven der Empfangssignalstärkeanzeige der Transponder und der Schablone zu erhalten, wenn der Korrelationswert das Maximum ist,
wobei eine Zeit in der Schablone als Standardzeit herangezogen wird, um die Zeit zu erhalten, wann die Transponder die Lese-/Schreibvorrichtungen passieren, basierend auf der Standardzeit und dem Zeitintervall, und
(3) Berechnen, basierend auf den Zeitintervallen und dem Abstand zwischen einer Antenne des RFID-Systems und der Betriebsplattform, der Ankunftszeit für jedes Werkstück an der Betriebsplattform, um FCFR sicherzustellen.

2. Verfahren im RFID-System nach Anspruch 1,
**dadurch gekennzeichnet, dass** die Standardzeit die Zwischenzeit der Schablone ist oder die Zeit ist, zu der die Empfangssignalstärkeanzeige in der Schablone den Maximalwert erreicht, und dass die Zeit des Passierens der Transponder vor den Antennen der Lese-/Schreibvorrichtungen basierend auf der Standardzeit und dem Zeitintervall erhalten wird.

3. Verfahren im RFID-System nach einem der Ansprüche 1-2, **dadurch gekennzeichnet,**
**dass** das Verfahren ferner eine Berechnung durchführt, die eine Zeit in der Schablone als Standardzeit heranzieht und die Zeit berechnet, wann die Transponder die Lese-/Schreibvorrichtungen passieren, basierend auf der Standardzeit und dem Zeitintervall; oder die dazu dient, die Bewegungsgeschwindigkeit eines Werkstücks basierend auf dem Zeitintervall zwischen den Transpondern für den Korrelationsabgleich und dem Abstand zwischen den Transpondern zu berechnen.

4. Verfahren im RFID-System nach Anspruch 1, **dadurch gekennzeichnet, dass** die Transponder für den Korrelationsabgleich verschiedene Kennzeichner haben.

5. Verfahren im RFID-System nach Anspruch 4, **dadurch gekennzeichnet, dass** die Transponder für den Korrelationsabgleich jeweils einen ungeraden elektronischen Produktcode-Kennzeichner und einen geraden elektronischen Produktcode-Kennzeichner haben.

6. Verfahren im RFID-System nach Anspruch 4 oder Anspruch 5, **dadurch gekennzeichnet, dass** eine Bewegungsgeschwindigkeit des Werkstücks gemäß dem Zeitintervall zwischen den Transpondern für den Korrelationsabgleich und dem Abstand zwischen den Transpondern berechnet wird.

7. Verfahren im RFID-System nach Anspruch 6, **dadurch gekennzeichnet, dass** die Bewegungsrichtung des Werkstücks gemäß der Position der Transponder für den Korrelationsabgleich berechnet wird.

8. Verfahren im RFID-System nach den Ansprüchen 1-5, **dadurch gekennzeichnet, dass** die Lese-/Schreibvorrichtungen in jedem Lesezyklus die in ihrem jeweiligen Lese-/Schreibbereich befindlichen Transponder lesen, die Empfangssignalstärkeanzeige der Transponder erfassen, und dass anschließend die Lese-/Schreibvorrichtungen einen neuen Lesezyklus für die in ihrem Lese-/Schreibbereich befindlichen Transponder ausführen.

9. Verfahren im RFID-System nach Anspruch 8, **dadurch gekennzeichnet, dass** in jedem Lesezyklus die Lese-/Schreibvorrichtungen zuerst die Empfangssignalstärkeanzeige jedes in ihrem Lese-/Schreibbereich befindlichen aktiven Transponders erfassen; und dass danach die Lese-/Schreibvorrichtungen die Empfangssignalstärkeanzeige eines neuen Transponders erfassen, der gerade in den Lese-/Schreibbereich eingetreten ist, oder, wenn sie dauerhaft die Empfangssignalstärkeanzeige eines Transponders nicht erfassen können, Sie den betreffenden Transponder als inaktiven Transponder identifizieren.

10. Verfahren im RFID-System nach Anspruch 9, **dadurch gekennzeichnet, dass** in jedem Lesezyklus die Lese-/Schreibvorrichtungen einen Auswahlbefehl einzeln an die in ihrem Lese-/Schreibbereich befindlichen aktiven Transponder senden, um diese Transponder auszuwählen, und die Empfangssignalstärkeanzeige der ausgewählten aktiven Transponder erfassen.

11. Verfahren im RFID-System nach Anspruch 10, **dadurch gekennzeichnet, dass** der Auswahlbefehl "SELECT (MASK=Tag ID, Target=S2, Action=100)" lautet, wobei "MASK=Tag ID" den Kennzeichner des ausgewählten Transponders bezeichnet, "Target=S2" angibt, dass der ausgewählte Zeitraum S2 ist, und "Action=100" anzeigt, dass, falls der Kennzeichner eines Transponders dem Transponderkennzeichner "Tag ID" entspricht, S2 des betreffenden Transponders auf "B" gesetzt wird oder andernfalls S2 des betreffenden Transponders auf "A" gesetzt wird.

12. Verfahren im RFID-System nach Anspruch 9, **dadurch gekennzeichnet, dass** in jedem Lesezyklus die Lese-/Schreibvorrichtungen einen Abfragebefehl senden, um den neuen Transponder, der gerade in den Lese-/Schreibbereich eingetreten ist, abzufragen und die Empfangssignalstärkeanzeige des neuen Transponders zu erfassen.

13. Verfahren im RFID-System nach Anspruch 12, **dadurch gekennzeichnet, dass** der Abfragebefehl "Query (Q=0, S0, A)" lautet und für den neuen, gerade in den Lese-/Schreibbereich eingetretenen Transponder oder für den inaktiven Transponder S0 des Transponders auf "A" gesetzt wird und für den aktiven, im Lese-/Schreibbereich befindlichen Transponder S0 des Transponders auf "B" gesetzt wird.

14. Verfahren im RFID-System nach Anspruch 9, **dadurch gekennzeichnet, dass**, wenn die Zahl der dauerhaften Nichterfassungen der Empfangssignalstärkeanzeige eines Transponders einen Schwellwert erreicht, der Transponder als inaktiver Transponder identifiziert wird.

15. Verfahren im RFID-System nach Anspruch 8, **dadurch gekennzeichnet, dass** die Lese-/Schreibvorrichtungen eine Statustabelle aufweisen, in der die Empfangssignalstärkeanzeige jedes Transponders, der von den Lese-/Schreibvorrichtungen gelesen wird, die Lesezeit, der Status der Transponder und die Anzahl der Empfangssignalstärkeanzeigen der Transponder gespeichert werden, und wobei die Statustabelle während jedes Lesezyklus aktualisiert wird.

16. Lese-/Schreibvorrichtung, die die Transponder im RFID-System liest bzw. beschreibt, **dadurch gekennzeichnet, dass** die Lese-/Schreibvorrichtung aufweist:
eine Leseeinheit zum Lesen von wenigstens zwei Transpondern aus einer Gruppe von Transpondern und zum Erfassen der Hüllkurven der Empfangssignalstärkeanzeige dieser Transponder, wobei jeder der Transponder an einem Werkstück auf einem Förderband angebracht ist;
eine Speichereinheit zum Speichern der Hüllkurve der Empfangssignalstärkeanzeige eines der Transponder als Schablone;
eine Korrelationseinheit zum Durchführen eines Korrelationsabgleichs zwischen den Hüllkurven der Empfangssignalstärkeanzeige der Transponder und der Schablone, um das Zeitintervall zwischen den Hüllkurven der Empfangssignalstärkeanzeige der Transponder und der Schablone zu erhalten, wenn der Korrelationswert das Maximum ist,
**dadurch gekennzeichnet,**
**dass** eine Zeit in der Schablone als Standardzeit herangezogen wird, um die Zeit zu erhalten, wann die Transponder die Lese-/Schreibvorrichtungen passieren, basierend auf der Standardzeit und dem Zeitintervall, und
**dass** basierend auf den Zeitintervallen und dem Abstand zwischen einer Antenne des RFID-Systems und einer Betriebsplattform die Ankunftszeit jedes Werkstücks an der Betriebsplattform berechnet wird, um einen First-Come-First-Read(FCFR)-Betrieb sicherzustellen.

17. Lese-/Schreibvorrichtung, die die Transponder im RFID-System liest bzw. beschreibt, nach Anspruch 16, **dadurch gekennzeichnet, dass** die Lese-/Schreibvorrichtung ferner eine Befehlssendeeinheit aufweist, die dazu dient, den Auswahlbefehl und den Abfragebefehl zu senden, wobei der Auswahlbefehl die während jedes Lesezyklus in deren Lese-/Schreibbereich befindlichen aktiven Transponder auswählt und die Empfangssignalstärkeanzeige der ausgewählten aktiven Transponder erfasst, und wobei der Abfragebefehl dazu dient, während jedes Lesezyklus den neuen Transponder, der gerade in den Lese-/Schreibbereich eingetreten ist, abzufragen und die Empfangssignalstärkeanzeige des neuen Transponders zu erfassen.

## Revendications

1. Procédé pour assurer, à une plateforme d'opération, un principe premier arrivé-premier lu (FCFR) dans un système d'identification en radiofréquence (RFID), dans lequel le système RFID comprend un ou plusieurs lecteurs/enregistreurs et un groupe d'étiquettes et chacune de ces étiquettes est adjointe à une pièce à usiner sur une bande transporteuse, **caractérisé en ce que** le procédé comprend les stades suivants:
(1) dans des cycles multiples de lecture, les lecteurs/enregistreurs lisent au moins deux étiquettes parmi le groupe d'étiquettes, acquièrent la séquence d'indications reçues de force de signal résultant des cycles multiples de lecture, comme enveloppes des étiquettes et mémorisent l'enveloppe d'indications reçues de force de signal de l'une des étiquettes comme gabarit;
(2) on effectue une correspondance de corrélation entre les enveloppes d'indications reçues de force du signal des étiquettes et le gabarit pour obtenir l'intervalle de temps entre les enveloppes d'indications reçues de force du signal des étiquettes et le gabarit lorsque la valeur de corrélation est le maximum,
dans lequel un temps du gabarit est pris comme temps standard pour obtenir le temps des étiquettes passant dans les lecteurs/enregistreurs sur la base du temps standard et de l'intervalle de temps et
(3) on calcule, sur la base des intervalles de temps et de la distance entre une antenne du système RFID et la plateforme d'opération, le temps d'arrivée pour chaque pièce à usiner à la plateforme d'opération pour assurer le FCFR.

2. Procédé dans le système RFID suivant la revendication 1, **caractérisé en ce que** le temps standard est le temps intermédiaire du gabarit ou est le temps où l'indication reçue de force du signal dans le gabarit atteint la valeur maximum, et le temps des étiquettes passant devant les antennes de lecteurs/enregistreurs est obtenu sur la base du temps standard et de l'intervalle de temps.

3. Procédé dans le système RFID suivant l'une quelconque des revendications 1 à 2, **caractérisé en ce que** le procédé effectue, en outre, un calcul, qui prend un temps dans le gabarit, comme temps standard, et calcule le temps des étiquettes passant dans le lecteur/enregistreur sur la base du temps standard et de l'intervalle de temps, ou qui est utilisé pour calculer la vitesse de déplacement d'une pièce à usiner sur la base de l'intervalle de temps entre les étiquettes pour la correspondance de corrélation et la distance entre les étiquettes.

4. Procédé dans le système RFID suivant la revendication 1, **caractérisé en ce que** les étiquettes pour la correspondance de corrélation ont des identificateurs différents.

5. Procédé dans le système RFID suivant la revendication 4, **caractérisé en ce que** les étiquettes pour la correspondance de corrélation ont chacune un identificateur électronique impair de code de produit et un identificateur électronique pair de code de produit.

6. Procédé dans le système RFID suivant la revendication 4 ou la revendication 5, **caractérisé en ce qu'**une vitesse de déplacement de la pièce à usiner est calculée en fonction de l'intervalle de temps entre les étiquettes pour la correspondance de corrélation et de la distance entre les étiquettes.

7. Procédé dans le système RFID suivant la revendication 6, **caractérisé en ce que** le sens de déplacement de la pièce à usiner est calculé en fonction de la position des étiquettes pour la correspondance de corrélation.

8. Procédé dans le système RFID suivant les revendications 1 à 5, **caractérisé en ce que** les lecteurs/enregistreurs lisent les étiquettes placées dans leur zone de lecture/enregistrement dans chaque cycle de lecture, acquièrent l'indication reçue de force du signal des étiquettes, puis les lecteurs/enregistreurs effectuent un nouveau cycle de lecture des étiquettes placées dans leur zone de lecture/enregistrement.

9. Procédé dans le système RFID suivant la revendication 8, **caractérisé en ce que**, dans chaque cycle de lecture, les lecteurs/enregistreurs acquièrent d'abord l'indication reçue de force du signal de chaque étiquette active, placée dans leur zone de lecture/enregistrement, puis les lecteurs/enregistreurs acquièrent l'indication reçue de force du signal d'une nouvelle étiquette, qui vient d'arriver dans la zone de lecture/enregistrement ou, échouant continuellement à acquérir l'indication reçue de force du signal d'une étiquette, ils identifieront l'étiquette comme une étiquette inactive.

10. Procédé dans le système RFID suivant la revendication 9, **caractérisé en ce que**, dans chaque cycle de lecture, les lecteurs/enregistreurs envoient une instruction de sélection individuellement aux étiquettes actives, localisées dans leur zone de lecture/enregistrement, pour sélectionner les étiquettes, et acquièrent l'indication reçue de force du signal des étiquettes actives sélectionnées.

11. Procédé dans le système RFID suivant la revendication 10, **caractérisé en ce que** l'instruction de sélection est SELECT (MASK=Tag ID, Target=S2, Action=100), dans laquelle MASK=Tad ID indique l'identificateur de l'étiquette sélectionnée, Target-S2 indique que la période sélectionnée est S2, et Action=100 indique que, si l'identificateur d'une étiquette correspond à Tag ID, S2 de l'étiquette est mis à B, sinon S2 de l'étiquette est mis à A.

12. Procédé dans le système RFID suivant la revendication 9, **caractérisé en ce que**, dans chaque cycle de lecture, chaque lecteur/enregistreur envoie une instruction d'interrogation pour interroger l'étiquette nouvelle, qui vient d'arriver dans la zone de lecture/enregistrement, et acquiert l'indication reçue de force du signal de l'étiquette nouvelle.

13. Procédé dans le système RFID suivant la revendication 12, **caractérisé en ce que** l'instruction d'interrogation est Query (Q=0, S0, A) et, pour cette étiquette nouvelle, qui vient d'arriver dans la zone de lecture/enregistrement ou pour l'étiquette inactive, S0 de l'étiquette est mis à A, et pour l'étiquette active, localisée dans la zone de lecture/enregistrement, S0 de l'étiquette est mis à B.

14. Procédé dans le système RFID suivant la revendication 9, **caractérisé en ce que**, lorsque les échecs continus pour acquérir l'indication reçue de force du signal d'une étiquette atteignent un nombre de seuil, l'étiquette est identifiée, comme une étiquette inactive.

15. Procédé dans le système RFID suivant la revendication 8, **caractérisé en ce que** les lecteurs/enregistreurs comprennent une table d'état, qui enregistre l'indication reçue de force du signal de chaque étiquette lue par les lecteurs/enregistreurs, le temps de lecture, l'état des étiquettes et le nombre d'indications reçues de force du signal des étiquettes, et mettent à jour la table d'état pendant chaque cycle de lecture.

16. Lecteur/enregistreur, qui lit et enregistre les étiquettes dans le système RFID, **caractérisé en ce que** le lecteur/enregistreur comprend :
une unité de lecture pour lire au moins deux étiquettes parmi un groupe d'étiquettes et acquérir les enveloppes d'indication reçue de force du signal des étiquettes, chacune des étiquettes étant adjointe à une pièce à usiner sur une bande transporteuse;
une unité de mémorisation pour mémoriser l'enveloppe d'indication reçue de force du signal de l'une des étiquettes, comme gabarit;
une unité de corrélation pour effectuer une correspondance de corrélation entre les enveloppes d'indication reçue de force du signal des étiquettes et le gabarit, afin d'obtenir l'intervalle de temps entre les enveloppes d'indication reçue de force du signal des étiquettes et le gabarit lorsque la valeur de corrélation est le maximum,
**caractérisé en ce qu'**un temps du gabarit est pris comme temps standard pour obtenir le temps des étiquettes passant dans les lecteurs/enregistreurs sur la base du temps standard et de l'intervalle de temps et
**en ce que**, sur la base des intervalles de temps et de la distance entre une antenne du système RFID et une plateforme d'opération, le temps d'arrivée, pour chaque pièce à usiner à la plateforme d'opération, pour assurer une opération premier arrivé-premier lu (FCFR ), est calculé.

17. Lecteur/enregistreur, qui lit et enregistre les étiquettes dans le système RFID suivant la revendication 16, **caractérisé en ce que** le lecteur/enregistreur comprend, en outre, une unité d'envoi d'instruction, qui est utilisée pour envoyer l'instruction de sélection et l'instruction d'interrogation, l'instruction de sélection sélectionnant les étiquettes actives, localisées dans sa zone de lecture/enregistrement pendant le cycle de lecture et acquérant l'indication reçue de force du signal des étiquettes actives sélectionnées, et l'instruction d'interrogation est utilisée pour interroger l'étiquette nouvelle, qui vient d'arriver dans la zone de lecture/enregistrement, pendant chaque cycle de lecture, et pour acquérir l'indication reçue de force du signal de l'étiquette nouvelle.
